# EUROPEAN PATENT APPLICATION

(11) **EP 4 776 473 A1**
(43) Date of publication of application: **15.07.2026**
(21) Application number: 24861361.4
(22) Date of filing: 30.07.2024
(51) Int. Cl.: H02J 13/00, H01M 8/04, H01M 8/04955, H02J 3/00, H02J 3/38

(54) **CONTROL METHOD, CONTROL DEVICE, AND ELECTRIC POWER GENERATION SYSTEM**

(30) Priority: 07.09.2023 JP 2023145110
(71) Applicant: Panasonic Intellectual Property Management Co., Ltd., Kadoma-shi, Osaka 571-0057 (JP)
(72) Inventor: FUJII, Tsutomu, kadoma-shi, Osaka 571-0057 (JP); KANEKO, Yasushi, kadoma-shi, Osaka 571-0057 (JP); TAGUCHI, Yoshifumi, kadoma-shi, Osaka 571-0057 (JP); TANAKA, Yoshikazu, kadoma-shi, Osaka 571-0057 (JP); ABE, Miki, kadoma-shi, Osaka 571-0057 (JP); ISE, Takehiko, kadoma-shi, Osaka 571-0057 (JP); YOSHIHARA, Yasumichi, kadoma-shi, Osaka 571-0057 (JP)
(74) Representative: Grünecker Patent- und Rechtsanwälte PartG mbB
(86) International application number: PCT/JP2024/027070
(87) International publication number: WO 2025/052813

(57) **Abstract**

A control method in the present disclosure includes creating a power generation plan for a power generation group including a plurality of power generation units, each including a fuel cell, and transmitting, to a controller that controls the plurality of power generation units on a basis of the power generation plan, an instruction to stop all the plurality of power generation units of the power generation group when communication from the controller is interrupted.

## Description

### Technical Field

The present invention relates to a control method, a control apparatus, and a power generation system.

### Background Art

PTL 1 describes a controlled apparatus capable of performing a preset, predetermined operation and a specified operation based on a message from a control apparatus that performs power control, the controlled apparatus including a communicator capable of obtaining messages from the control apparatus and a control unit that performs the predetermined operation when messages can no longer be obtained and a predetermined period of time has elapsed since a last message was obtained.

PTL 2 describes a power monitoring control apparatus for distributed power sources that obtains power information either directly from a smart meter connected to a power service line for drawing commercial power into a building or via a home energy management system for managing energy consumption within the building, the power monitoring control apparatus including a communication unit that performs wireless communication with the smart meter at intervals that allow recognition of transitions in power consumption in the building within a certain margin of error, a determination unit that determines whether the communication is satisfactory on the basis of a communication state of the communication unit, and a notification unit that, if the determination unit determines that the communication is not satisfactory, notifies of the determination result and situation information indicating a factor causing the negative determination result.

### Citation List

### Patent Literature

PTL 1: Japanese Unexamined Patent Application Publication No. 2017-195774
PTL 2: Japanese Unexamined Patent Application Publication No. 2021-164199

### Summary of Invention

### Technical Problem

The present disclosure aims to provide a control method, a control apparatus, and a power generation system capable of controlling a plurality of power generation units more appropriately than conventional techniques when, for example, communication from a controller that controls the plurality of power generation units is interrupted.

### Solution to Problem

In order to solve the problem, a control method according to an aspect of the present disclosure includes creating a power generation plan for a power generation group including a plurality of power generation units, each including a fuel cell, and transmitting, to a controller that controls the plurality of power generation units on a basis of the power generation plan, an instruction to stop all the plurality of power generation units of the power generation group when communication from the controller is interrupted.

In addition, a control apparatus according to another aspect of the present disclosure includes a first controller that creates a power generation plan for a power generation group including a plurality of power generation units, each including a fuel cell, and a communicator that receives communication from a second controller which controls the plurality of power generation units on a basis of the power generation plan, in which, when communication from the second controller via the communicator is interrupted, the first controller transmits an instruction to stop all the plurality of power generation units of the power generation group to the second controller via the communicator.

In addition, a power generation system according to another aspect of the present disclosure includes a plurality of power generation units including a fuel cell, and the control apparatus.

### Advantageous Effects of Invention

The control method, the control apparatus, and the power generation system according to the aspects of the present disclosure produce an effect of controlling a plurality of power generation units more appropriately than conventional techniques when communication from a controller that controls the plurality of power generation units is interrupted.

### Brief Description of Drawings

[Fig. 1] Fig. 1 is a diagram illustrating an example of a power generation system according to a first embodiment.
[Fig. 2] Fig. 2 is a flowchart illustrating an example of operation (control method) of a control apparatus in a power generation system according to the first embodiment.
[Fig. 3] Fig. 3 is a flowchart illustrating an example of operation (control method) of a control apparatus in a power generation system according to a first modification of the first embodiment.
[Fig. 4] Fig. 4 is a flowchart illustrating an example of operation (control method) of a control apparatus in a power generation system according to a second modification of the first embodiment.
[Fig. 5] Fig. 5 is a flowchart illustrating an example of operation (control method) of a control apparatus in a power generation system according to a third modification of the first embodiment.
[Fig. 6A] Fig. 6A is a flowchart illustrating an example of operation (control method) of a control apparatus in a power generation system according to a first example of the first embodiment.
[Fig. 6B] Fig. 6B is a flowchart illustrating an example of operation (control method) of a control apparatus in a power generation system according to a second example of the first embodiment.
[Fig. 6C] Fig. 6C is a flowchart illustrating an example of operation (control method) of a control apparatus in a power generation system according to a third example of the first embodiment.
[Fig. 7] Fig. 7 is a diagram illustrating an example of a power generation system according to a second embodiment.

### Description of Embodiments

Although PTL 1 describes, in paragraph [0067] thereof, for example, power control at a time of a communication failure with which a power control apparatus 12 cannot obtain a control instruction from a network 70, a response to be taken when communication from the network 70 to the power control apparatus 12 is normal but there is a failure in communication from the power control apparatus 12 to the network 70 is not examined.

Especially in a mode in which distributed power sources are fuel cells and the power control apparatus 12 receives a power generation plan from the network 70 and controls power generation of the fuel cells in accordance with the power generation plan, a response to be taken when a failure has occurred in the communication from the power control apparatus 12 to the network 70 is not examined.

A control method according to a first aspect of the present disclosure includes creating a power generation plan for a power generation group including a plurality of power generation units, each including a fuel cell, and transmitting, to a controller that controls the plurality of power generation units on a basis of the power generation plan, an instruction to stop all the plurality of power generation units of the power generation group when communication from the controller is interrupted.

With this configuration, the control method according to the present aspect can control the plurality of power generation units more appropriately than conventional techniques when the communication from the controller that controls the plurality of power generation units is interrupted.

For example, when a failure occurs only in the communication from the controller, the controller might not be able to recognize the occurrence of the communication failure because information indicating the power generation plan can be normally received. As a result, when the communication failure occurs, the controller might not be able to singlehandedly stop the power generation of all the plurality of power generation units of the power generation group even if the controller needs to.

The control method according to the present aspect, on the other hand, can reduce, as compared with the conventional techniques, occurrence of a situation in which the power generation of all the plurality of power generation units of the power generation group cannot be appropriately stopped, by transmitting an instruction to the controller to stop all the plurality of power generation units of the power generation group when the communication from the controller is interrupted.

A control method according to a second aspect of the present disclosure is the control method according to the first aspect, in which the instruction may be transmitted to the controller even after the communication from the controller is restored.

With this configuration, even after the communication from the controller is restored, the control method according to the present aspect can, by transmitting the instruction to the controller, appropriately control the plurality of power generation units after the communication from the controller is restored. For example, the control method according to the present aspect performs appropriate control when the communication from the controller is restored such that the power generation of the power generation group does not automatically resume on the basis of a power generation plan before the occurrence of the communication failure.

A control method according to a third aspect of the present disclosure is the control method according to the second aspect, in which, if a signal for canceling the instruction is received from outside, the transmission of the instruction to the controller may be stopped.

With this configuration, upon receiving the signal for canceling the instruction from the outside, the control method according to the present aspect can appropriately resume the power generation of the power generation group by stopping the transmission of the instruction to the controller. For example, the control method according to the present aspect can smoothly resume the power generation of the power generation group in timely maintenance work after the communication from the controller is restored.

The control apparatus according to a fourth aspect of the present disclosure is the control method according to any of the first to third aspects, in which, when the communication from the controller is interrupted, a signal for requesting the communication is stopped.

With this configuration, the control method according to the present aspect can allow the controller to recognize occurrence of a communication failure by stopping the signal for requesting communication when the communication from the controller is interrupted. As a result, the controller can stop all the plurality of power generation units of the power generation group at its own discretion. That is, the control method according to the present aspect can reduce the occurrence of the situation in which the power generation of all the plurality of power generation units of the power generation group cannot be appropriately stopped more effectively using both the instruction to the controller to stop all the plurality of power generation units of the power generation group and the operation performed by the controller to stop all the plurality of power generation units of the power generation group at its own discretion.

A control method according to a fifth aspect of the present disclosure is the control method according to any of the first to fourth aspects, in which the instruction may be a power generation plan in which an output of the power generation group is 0.

With this configuration, since the control method according to the present aspect transmits the power generation plan in which the output of the power generation group is 0 to the controller when the communication from the controller that controls the plurality of power generation units on the basis of the power generation plan of the power generation group is interrupted, the power generation of all the plurality of power generation units of the power generation group can be appropriately stopped as compared with a case where such a power generation plan is not transmitted.

A control method according to a sixth aspect of the present disclosure is the control method according to any of the first to fourth aspects, in which the instruction may be an instruction to stop all the plurality of power generation units of the power generation group.

With this configuration, since the control method according to the present aspect transmits the instruction to stop all the plurality of power generation units of the power generation group to the controller when the communication from the controller that controls the plurality of power generation units on the basis of the power generation plan of the power generation group is interrupted, the power generation of all the plurality of power generation units of the power generation group can be appropriately stopped as compared with a case where such a stop instruction is not transmitted to the controller.

A control method according to a seventh aspect of the present disclosure is the control method according to the second or third aspect, in which, before the communication from the controller is restored, the instruction may be a power generation plan in which an output of the power generation group is 0, and, after the communication from the controller is restored, the instruction may be an instruction to stop all the plurality of power generation units of the power generation group.

A control apparatus according to an eighth aspect of the present disclosure includes a first controller that creates a power generation plan for a power generation group including a plurality of power generation units, each including a fuel cell, and a communicator that receives communication from a second controller which controls the plurality of power generation units on a basis of the power generation plan, in which, when communication from the second controller via the communicator is interrupted, the first controller transmits an instruction to stop all the plurality of power generation units of the power generation group to the second controller via the communicator.

With this configuration, the control apparatus according to the present aspect can control the plurality of power generation units more appropriately than the conventional techniques when the communication from the second controller that controls the plurality of power generation units to the first controller that creates the power generation plan for the power generation group is interrupted. For example, when a failure occurs only in the communication from the second controller to the first controller, the second controller might not be able to recognize the occurrence of the communication failure because information indicating the power generation plan can be normally received. As a result, the second controller might not be able to singlehandedly stop the power generation of all the plurality of power generation units of the power generation group appropriately even if the second controller needs to.

The control apparatus according to the present aspect, on the other hand, can reduce, as compared with the conventional techniques, the occurrence of the situation in which the power generation of all the plurality of power generation units of the power generation group cannot be appropriately stopped, by transmitting an instruction to the second controller to stop all the plurality of power generation units of the power generation group when the communication from the second controller to the first controller is interrupted.

A power generation system according to a ninth aspect of the present disclosure may include a plurality of power generation units including a fuel cell, and the control apparatus according to the eighth aspect.

With this configuration, the power generation system according to the present aspect can control the plurality of power generation units more appropriately than the conventional techniques when the communication from the second controller that controls the plurality of power generation units to the first controller that creates the power generation plan for the power generation group is interrupted. Note that details of operations and effects produced by the power generation system according to the present aspect are the same as those produced by the control apparatus according to the eighth aspect, and description thereof is omitted.

Specific examples of the above aspects of the present disclosure will be described hereinafter with reference to the accompanying drawings. The specific examples described hereinafter are examples of the aspects of the present disclosure. Shapes, values, components, arrangement positions and connection modes of the components, and the like mentioned in the following description, therefore, are not intended to limit the claims, unless otherwise described in the claims.

In addition, among the components described hereinafter, ones not described in the independent claims, which define the broadest concepts of the present disclosure, will be described as optional components. In addition, description of components given the same reference numerals in the drawings might be omitted. The drawings schematically illustrate the components to facilitate understanding, and shapes, dimensional ratios, and the like may not accurately represent reality.

Furthermore, with respect to operations of apparatuses, order of steps may be switched or known steps may be added as necessary.

### (First Embodiment)

### [Apparatus Configuration]

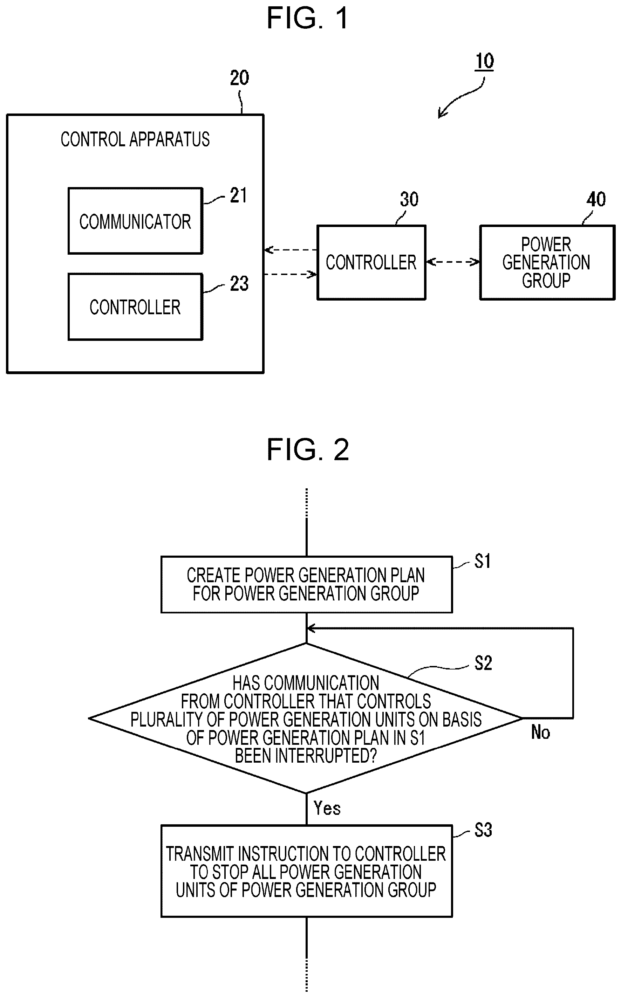

Fig. 1 is a diagram illustrating an example of a power generation system according to a first embodiment.

As illustrated in Fig. 1, a power generation system 10 according to the present embodiment includes a control apparatus 20, a controller 30, and a power generation group 40. As illustrated in Fig. 1, the control apparatus 20 includes a communicator 21 and a controller 23.

Here, the power generation group 40 includes a plurality of power generation units including fuel cells. As the power generation system 10, therefore, a system that supplies large power to a power system, for example, can be constructed. In this case, the power generation system 10 may include a power generation unit group including a plurality of power generation units, and the power generation group 40 may correspond to each of power generation groups obtained by dividing the power generation unit group. Detailed configuration of the power generation system 10 will be described in a second embodiment.

The communicator 21 is a receiver that receives communication from the controller 30 that controls the plurality of power generation units on the basis of a power generation plan of the power generation group 40. For example, the communicator 21 may receive, at predetermined time intervals, various types of data regarding an operation state of each power generation unit transmitted from the controller 30 over a communication network.

The "predetermined time intervals" may be about 30 seconds, for example, but are not limited to this.

Note that the communicator 21 may transmit information indicating the power generation plan of the power generation group 40 to the controller 30. The power generation plan may be determined by the controller 23. In addition, the communicator 21 may receive information indicating the power generation plan of the power generation group 40 from an "external system", which is not illustrated, at appropriate timing. For example, the communicator 21 may receive, at predetermined time intervals, the power generation plan transmitted from a terminal or a server over a communication network.

The "predetermined time intervals" may be about 30 minutes, for example, but are not limited to this.

In addition, at this time, the controller 23 may determine the power generation plan of the power generation group 40 on the basis of the information indicating the power generation plan received from the "external system". The power generation plan indicated by the information received from the "external system" may be determined as the power generation plan of the power generation group 40 as is, or a power generation plan obtained by correcting the power generation plan indicated by the information as the power generation plan of the power generation group 40.

Users of the terminal or the server include direct or indirect users of the control apparatus 20. The direct users of the control apparatus 20 include, for example, a manager of the control apparatus 20. The indirect users of the control apparatus 20 include, for example, an owner of the power generation system 10 and the like. The owner may be a consumer that receives a service for supplying power generated by the power generation system 10 or may be a power generation business operator that supplies power to the consumer using the power generation system 10.

The controller 23 creates a power generation plan for the power generation group 40 including the plurality of power generation units that includes fuel cells and, when communication from the controller 30 via the communicator 21 is interrupted, transmits, via the communicator 21, an instruction to the controller 30 to stop all the power generation units of the power generation group 40.

Here, "when communication from the controller 30 via the communicator 21 is interrupted" refers to a case where a communication failure occurs in a communication network between the control apparatus 20 and the controller 30, a case where the communicator 21 fails, or the like, but is not limited to these. For example, when the control apparatus 20 and the controller 30 are connected to each other by wire, communication from the controller 30 via the communicator 21 might be interrupted if there is a connection failure in cable and connectors between the two.

It is sufficient that the controller 23 has a control function, and the controller 23 includes an arithmetic processing unit (not illustrated) and a storage unit storing a control program. When the arithmetic processing unit reads and executes the control program stored in the storage unit, the controller 23 performs predetermined control. An example of the arithmetic processing unit is a microprocessor. The storage unit is, for example, a memory.

### [Operation]

Fig. 2 is a flowchart illustrating an example of operation (control method) of the control apparatus in the power generation system according to the first embodiment. The arithmetic processing unit of the controller 23 of the control apparatus 20 may perform the following operation by, for example, reading the control program from the storage unit of the controller 23. The control apparatus 20, however, need not necessarily perform the following operation. An operator may perform a part of the operation. In the following example, a case where the control apparatus 20 controls the operation will be described.

First, in step S1, while the power generation system 10 is generating power, the controller 23 creates a power generation plan for the power generation group 40 including the plurality of power generation units that includes fuel cells.

Next, in step S2, whether communication from the controller 30 that controls the plurality of power generation units on the basis of the power generation plan created in step S1 has been interrupted is determined. The determination may be made by transmitting, from the control apparatus 20 to the controller 30, a request to transmit data regarding the operation state of each power generation unit a predetermined number of times at predetermined time intervals. For example, if the control apparatus 20 does not successively receive the data regarding the operation state of each power generation unit from the controller 30 the predetermined number of times at the predetermined time intervals, it may be determined that the communication from the controller 30 has been interrupted. The "predetermined time intervals" may be about 30 seconds, for example, but are not limited to this. The "predetermined number of times" may be about six times, for example, but is not limited to this.

If it is determined that the communication from the controller 30 has not been interrupted ("No" in step S2), the operation in step S2 is performed again at appropriate timing.

If it is determined that the communication from the controller 30 has been interrupted ("Yes" in step S2), the control apparatus 20 transmits, in step S3, an instruction to the controller 30 to stop all the power generation units of the power generation group 40. Note that, at this time, an appropriate terminal or server may be notified, over the communication network, of the error, that is, that the communication from the controller 30 has been interrupted. The error notification may be performed by transmission of an email indicating the occurrence of the communication failure.

According to the present embodiment described above, when communication from the controller 30 that controls the plurality of power generation units is interrupted, the power generation units can be controlled more appropriately than the conventional techniques. For example, when a failure occurs only in the communication from the controller 30 and no failure has occurred in communication from the control apparatus 20 to the controller 30, the controller 30 might not be able to recognize the occurrence of the communication failure because information indicating the power generation plan can be normally received. Even if power generation by all the power generation units of the power generation group 40 needs to be stopped after the occurrence of the communication failure, therefore, it might not be possible to appropriately stop the power generation only by the control of the controller 30.

According to the present embodiment, therefore, when communication from the controller 30 is interrupted, the control apparatus 20 can reduce, as compared with the conventional techniques, occurrence of a situation in which the power generation of all the power generation units of the power generation group 40 cannot be appropriately stopped, by transmitting an instruction to the controller 30 to stop all the power generation units of the power generation group 40.

### (First Modification)

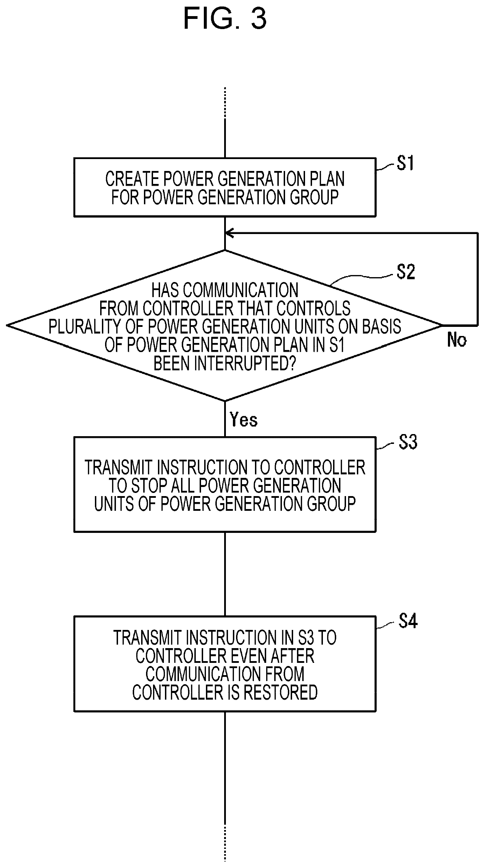

Fig. 3 is a flowchart illustrating an example of operation (control method) of a power generation system according to a first modification of the first embodiment. The following operation may be performed when, for example, the arithmetic processing unit of the controller 23 of the control apparatus 20 reads the control program from the storage unit of the controller 23. The control apparatus 20, however, need not necessarily perform the following operation. The operator may perform a part of the operation. In the following example, a case where the control apparatus 20 controls the operation will be described.

Operations in step S1, step S2, and step S3 in Fig. 3 are the same as the operations in step S1, step S2, and step S3 in Fig. 2, respectively, and description thereof is omitted.

After the operation in step S3 in Fig. 3 is performed, the control apparatus 20 transmits, in step S4, "an instruction to stop all the power generation units of the power generation group 40" to the controller 30 even after the communication from the controller 30 to the control apparatus 20 is restored. Note that "the determination whether the communication from the controller 30 has been restored" may be performed by, for example, transmitting the request to transmit data regarding the operation state of each power generation unit from the control apparatus 20 to the controller 30 the predetermined number of times at the predetermined time intervals as in step S2 in Fig. 2.

According to the present modification described above, by transmitting the instruction to the controller 30 even after the communication from the controller 30 is restored, the power generation units can be appropriately controlled after the communication from the controller 30 is restored, as compared with a case where such an instruction is not transmitted. For example, according to the present modification, when the communication from the controller 30 is restored, control is appropriately performed such that the power generation of the power generation group 40 does not automatically resume on the basis of the power generation plan before the occurrence of the communication failure.

The control method used by the control apparatus 20 according to the present modification may be the same as that according to the first embodiment except for the above features.

### (Second Modification)

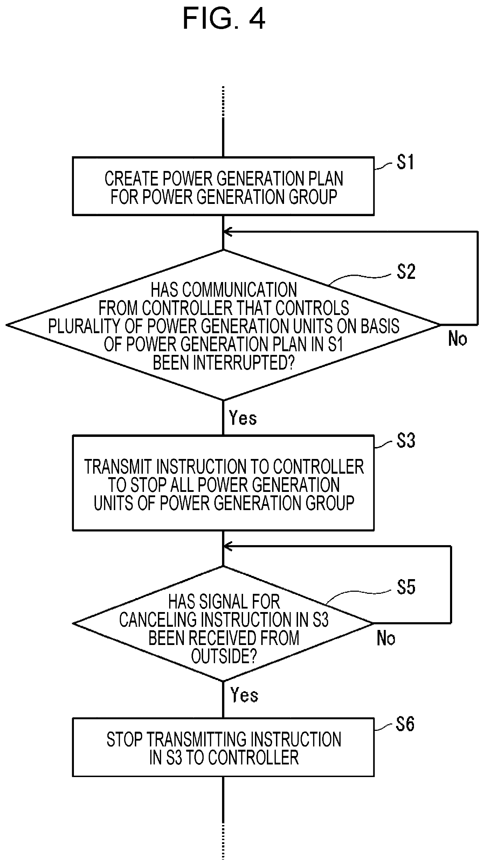

Fig. 4 is a flowchart illustrating an example of operation (control method) of a control apparatus in a power generation system according to a second modification of the first embodiment. The following operation may be performed when, for example, the arithmetic processing unit of the controller 23 of the control apparatus 20 reads the control program from the storage unit of the controller 23. The control apparatus 20, however, need not necessarily perform the following operation. The operator may perform a part of the operation. In the following example, a case where the control apparatus 20 controls the operation will be described.

Operations in step S1, step S2, and step S3 in Fig. 4 are the same as the operations in step S1, step S2, and step S3 in Fig. 2, respectively, and description thereof is omitted.

After the operation in step S3 in Fig. 4 is performed, whether the control apparatus 20 has received a signal for canceling "the instruction to stop all the power generation units of the power generation group 40" in step S3 from the outside is determined in step S5. Here, the "outside" may be an "external device" that is not illustrated. The "external device" may be, for example, an information terminal carried by a maintenance worker, a computer at a maintenance company, or the like, but is not limited to these.

If a signal for canceling the instruction has not been received from the outside ("No" in step S5), the operation in step S5 is performed again at appropriate timing.

If a signal for canceling the instruction has been received from the outside ("Yes" in step S5), the transmission of the instruction from the control apparatus 20 to the controller 30 is stopped in step S6.

According to the present modification described above, when the signal for canceling the instruction is received from the outside, the power generation of the power generation group 40 can be appropriately resumed by stopping the transmission of the instruction to the controller 30. For example, according to the present modification, the power generation of the power generation group 40 can be smoothly resumed in timely maintenance work after the communication from the controller 30 is restored.

The control method used by the control apparatus 20 according to the present modification may be the same as that according to the first embodiment or the first modification of the first embodiment except for the above features.

### (Third Modification)

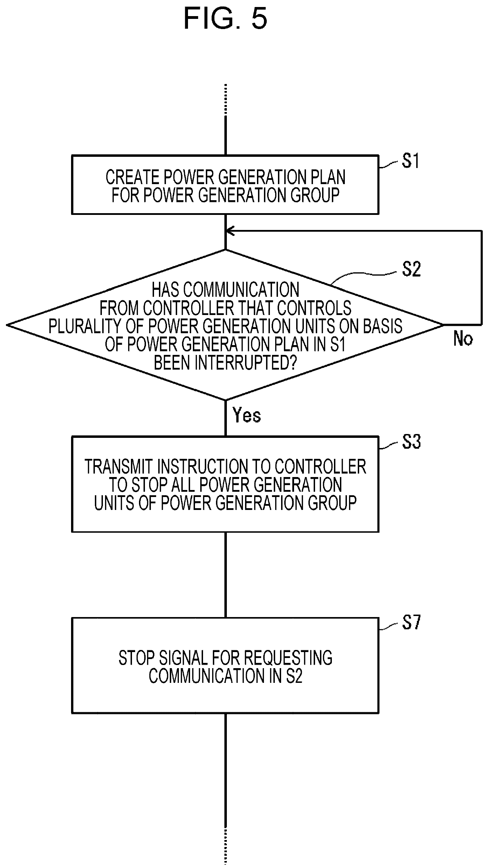

Fig. 5 is a flowchart illustrating an example of operation (control method) of a control apparatus in a power generation system according to a third modification of the first embodiment. The following operation may be performed when, for example, the arithmetic processing unit of the controller 23 of the control apparatus 20 reads the control program from the storage unit of the controller 23. The control apparatus 20, however, need not necessarily perform the following operation. The operator may perform a part of the operation. In the following example, a case where the control apparatus 20 controls the operation will be described.

Operations in step S1, step S2, and step S3 in Fig. 5 are the same as the operations in step S1, step S2, and step S3 in Fig. 2, respectively, and description thereof is omitted.

After the operation in step S3 in Fig. 5 is performed, a signal for requesting the communication from the controller 30 is stopped in step S7. Specifically, a signal for requesting transmission of data regarding the operation state of each power generation unit from the control apparatus 20 to the controller 30 is stopped for a predetermined period of time. The "predetermined period of time" may be about 4 minutes, for example, but is not limited to this. After the elapse of the "predetermined period of time", the control apparatus 20 may resume the transmission of the signal for requesting transmission of data regarding the operation state of each power generation unit to the controller 30.

According to the present modification described above, when the communication from the controller 30 is interrupted, the signal for requesting the communication is stopped to allow the controller 30 to recognize the occurrence of the communication failure. As a result, the controller 30 can stop all the power generation units of the power generation group 40 at its own discretion. That is, according to the present modification, using both the instruction to the controller 30 to stop all the power generation units of the power generation group and the operation performed by the controller 30 to stop all the power generation units of the power generation group 40 at its own discretion, occurrence of a situation in which the power generation of the all the power generation units of the power generation group 40 cannot be appropriately stopped can be reduced more effectively.

The control method used by the control apparatus 20 according to the present modification may be the same as that according to the first embodiment or the first or second modification of the first embodiment except for the above features.

### (First Example)

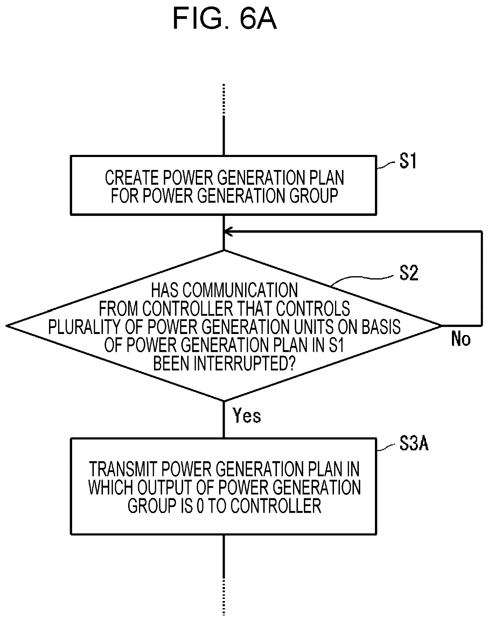

Fig. 6A is a flowchart illustrating an example of operation (control method) of a control apparatus in a power generation system according to a first example of the first embodiment. The following operation may be performed when, for example, the arithmetic processing unit of the controller 23 of the control apparatus 20 reads the control program from the storage unit of the controller 23. The control apparatus 20, however, need not necessarily perform the following operation. The operator may perform a part of the operation. In the following example, a case where the control apparatus 20 controls the operation will be described.

Operations in step S1 and step S2 in Fig. 6A are the same as the operations in step S1 and step S2 in Fig. 2, respectively, and description thereof is omitted.

If it is determined that the communication from the controller 30 has been interrupted ("Yes" in step S2), the control apparatus 20 transmits, in step S3A, a power generation plan in which an output of the power generation group 40 is 0 to the controller 30.

According to the present example described above, since the control apparatus 20 transmits the power generation plan in which the output of the power generation group 40 is 0 to the controller 30 when the communication from the controller 30 that controls the plurality of power generation units on the basis of the power generation plan of the power generation group 40 is interrupted, the power generation of all the power generation units of the power generation group 40 can be appropriately stopped as compared with a case where such a power generation plan is not transmitted.

The control method used by the control apparatus 20 according to the present example may be the same as that according to the first embodiment or one of the first to third modifications of the first embodiment except for the above features.

### (Second Example)

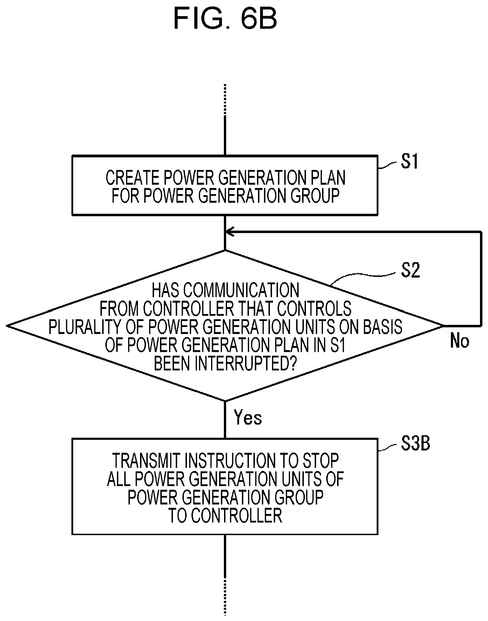

Fig. 6B is a flowchart illustrating an example of operation (control method) of a control apparatus in a power generation system according to a second example of the first embodiment. The following operation may be performed when, for example, the arithmetic processing unit of the controller 23 of the control apparatus 20 reads the control program from the storage unit of the controller 23. The control apparatus 20, however, need not necessarily perform the following operation. The operator may perform a part of the operation. In the following example, a case where the control apparatus 20 controls the operation will be described.

Operations in step S1 and step S2 in Fig. 6B are the same as the operations in step S1 and step S2 in Fig. 2, respectively, and description thereof is omitted.

If it is determined that the communication from the controller 30 has been interrupted ("Yes" in step S2), the control apparatus 20 transmits, in step S3B, the instruction to stop all the power generation units of the power generation group 40 to the controller 30.

According to the present example described above, since the control apparatus 20 transmits the instruction to stop all the power generation units of the power generation group 40 to the controller 30 when the communication from the controller 30 that controls the plurality of power generation units on the basis of the power generation plan of the power generation group 40 is interrupted, the power generation of all the power generation units of the power generation group 40 can be appropriately stopped as compared with a case where such a stop instruction is not transmitted.

The control method used by the control apparatus 20 according to the present example may be the same as that according to the first embodiment, one of the first to third modifications of the first embodiment, or the first example of the first embodiment except for the above features.

### (Third Example)

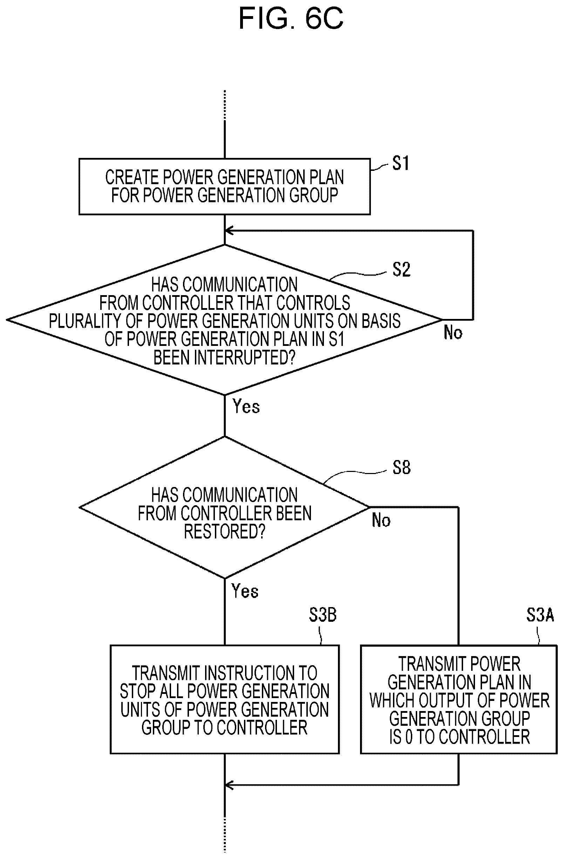

Fig. 6C is a flowchart illustrating an example of operation (control method) of a control apparatus in a power generation system according to a third example of the first embodiment. The following operation may be performed when, for example, the arithmetic processing unit of the controller 23 of the control apparatus 20 reads the control program from the storage unit of the controller 23. The control apparatus 20, however, need not necessarily perform the following operation. The operator may perform a part of the operation. In the following example, a case where the control apparatus 20 controls the operation will be described.

Operations in step S1 and step S2 in Fig. 6C are the same as the operations in step S1 and step S2 in Fig. 2, respectively, and description thereof is omitted.

If it is determined that the communication from the controller 30 has been interrupted ("Yes" in step S2), whether the communication from the controller 30 has been restored is determined in step S8. Note that "the determination whether the communication from the controller 30 has been restored" may be performed by, for example, transmitting the request to transmit data regarding the operation state of each power generation unit from the control apparatus 20 to the controller 30 a predetermined number of times at predetermined time intervals as in step S2 in Fig. 2.

Before the communication from the controller 30 is restored ("No" in step S8), the control apparatus 20 transmits, in step S3A, the power generation plan in which the output of the power generation group 40 is 0 to the controller 30.

After the communication from the controller 30 is restored ("Yes" in step S8), the control apparatus 20 transmits, in step S3B, the instruction to stop all the power generation units of the power generation group 40 to the controller 30. At this time, the operation in step S3A may be canceled. That is, the operation performed by the control apparatus 20 to transmit the power generation plan in which the output of the power generation group is 0 to the controller 30 may be ended.

Note that operations and effects produced by the control method used by the control apparatus 20 according to the present example can be easily understood from the operations and the effects described in the first and second examples, and description thereof is omitted.

The control method used by the control apparatus 20 according to the present example may be the same as that according to the first embodiment, one of the first to third modifications of the first embodiment, or the first or second example of the first embodiment except for the above features.

### (Second Embodiment)

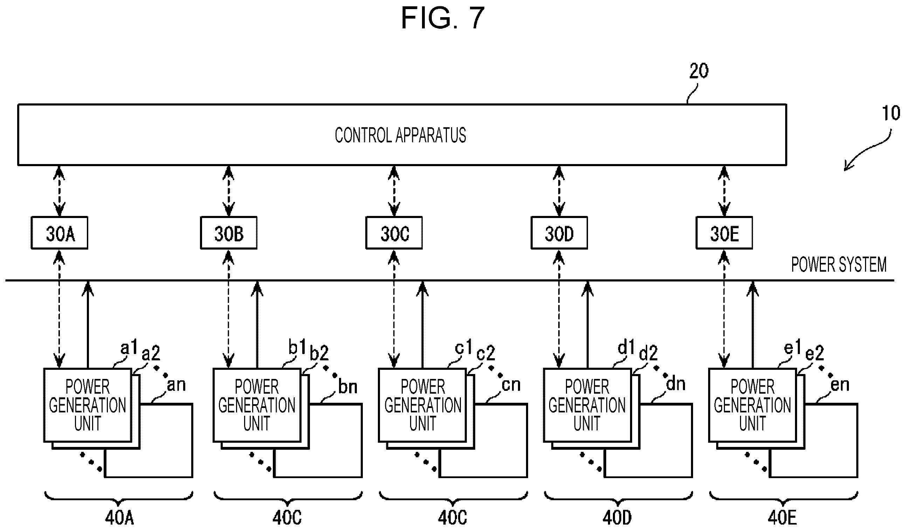

Fig. 7 is a diagram illustrating an example of a power generation system according to a second embodiment.

As illustrated in Fig. 7, a power generation system 10 according to the present embodiment includes a control apparatus 20, controllers 30A to 30E, and power generation groups 40A to 40E. Note that a configuration inside the control apparatus 20 is the same as that in the first embodiment, detailed description thereof is omitted.

Here, the controllers 30A to 30E correspond to the controller 30 in Fig. 1. The power generation groups 40A to 40E correspond to the power generation group 40 in Fig. 1. That is, in the example illustrated in Fig. 7, the power generation system 10 includes a power generation unit group including a plurality of power generation units that includes fuel cells. The power generation unit group is divided by appropriate rules and grouped as sets of a plurality of power generation units. Note that although not illustrated, these power generation units each include a fuel cell stack, a direct current (DC)/alternating current (AC) conversion device that converts DC power generated by the fuel cell stack into AC power to be output to a power system, and a control device that controls operation of these devices.

In this example, the power generation unit group is grouped as power generation units a1 to an belonging to the power generation group 40A, power generation units b1 to bn belonging to the power generation group 40B, power generation units c1 to cn belonging to the power generation group 40C, power generation units d1 to dn belonging to the power generation group 40D, and power generation units e1 to en belonging to the power generation group 40E. All the power generation units belonging to each power generation group will also be simply referred to as "all the power generation units of the power generation group".

The configuration of the power generation unit group described above, however, is an example, and is not limited to this example. For example, the power generation unit group may be grouped as a plurality of power generation units of a single power generation croup.

The controllers 30A to 30E are provided for the power generation units a1 to an of the power generation group 40A, the power generation units b1 to bn of the power generation group 40B, the power generation units c1 to cn of the power generation group 40C, the power generation units d1 to dn of the power generation group 40D, and the power generation units e1 to en of the power generation group 40E, respectively, and control operation of each of all the power generation units of the power generation groups.

For example, the controller 30A controls an output of each of the power generation units a1 to an via the communication network in such a way as to achieve efficient operations (for example, optimization of lifetime) of the power generation units a1 to an belonging to the power generation group 40A. Note that a control apparatus need not be provided for the power generation units, and the controllers 30A to 30E may directly control the operation of the power generation units belonging to the corresponding power generation groups.

It is sufficient that the controllers 30A to 30E have a control function, and the controllers 30A to 30E each include an arithmetic processing unit (not illustrated), a storage unit storing a control program, and a communicator. When the arithmetic processing unit reads and executes the control program stored in the storage unit, each of the controllers 30A to 30E performs predetermined control. An example of the arithmetic processing unit is a microprocessor. The storage unit is, for example, a memory.

Operations and effects produced by the power generation system 10 according to the present embodiment are the same as those described in the first embodiment, and description thereof is omitted.

The power generation system 10 according to the present embodiment may be the same as that according to the first embodiment, one of the first to third modifications of the first embodiment, or one of the first to third examples of the first embodiment except for the above features.

The first embodiment, the first to third modifications of the first embodiment, the first to third examples of the first embodiment, and the second embodiment may be combined with each other insofar as combined elements do not exclude each other. From the above description, various improvements and other embodiments of the present disclosure are apparent to those skilled in the art. The above description, therefore, should be interpreted only as examples, and is provided in order to show best modes for carrying out the present disclosure to those skilled in the art. Details of the structures and/or the functions can be essentially changed without deviating from the spirit of the present disclosure.

### Industrial Applicability

An aspect of the present disclosure can be used for a control method, a control apparatus, and a power generation system capable of controlling a plurality of power generation units more appropriately than conventional techniques when communication from a controller that controls the plurality of power generation units is interrupted.

### Reference Signs List

10 power generation system
20 control apparatus
21 communicator
23 controller
30 controller
30A controller
30B controller
30C controller
30D controller
30E controller
40 power generation group
40A power generation group
40B power generation group
40C power generation group
40D power generation group
40E power generation group
a1 to an power generation unit
b1 to bn power generation unit
c1 to cn power generation unit
d1 to dn power generation unit
e1 to en power generation unit

## Claims

1. A control method comprising:
creating a power generation plan for a power generation group including a plurality of power generation units, each including a fuel cell; and
transmitting, to a controller that controls the plurality of power generation units on a basis of the power generation plan, an instruction to stop all the plurality of power generation units of the power generation group when communication from the controller is interrupted.

2. The control method according to claim 1,
wherein the instruction is transmitted to the controller even after the communication from the controller is restored.

3. The control method according to claim 2,
wherein, if a signal for canceling the instruction is received from outside, the transmission of the instruction to the controller is stopped.

4. The control method according to any of claims 1 to 3,
wherein, when the communication from the controller is interrupted, a signal for requesting the communication is stopped.

5. The control method according to any of claims 1 to 4,
wherein the instruction is a power generation plan in which an output of the power generation group is 0.

6. The control method according to any of claims 1 to 4,
wherein the instruction is an instruction to stop all the plurality of power generation units of the power generation group.

7. The control method according to claim 2 or 3,
wherein, before the communication from the controller is restored, the instruction is a power generation plan in which an output of the power generation group is 0, and
wherein, after the communication from the controller is restored, the instruction is an instruction to stop all the plurality of power generation units of the power generation group.

8. A control apparatus comprising:
a first controller that creates a power generation plan for a power generation group including a plurality of power generation units, each including a fuel cell; and
a communicator that receives communication from a second controller which controls the plurality of power generation units on a basis of the power generation plan,
wherein, when communication from the second controller via the communicator is interrupted, the first controller transmits an instruction to stop all the plurality of power generation units of the power generation group to the second controller via the communicator.

9. A power generation system comprising:
a plurality of power generation units including a fuel cell; and
the control apparatus according to claim 8.
